# EUROPEAN PATENT SPECIFICATION

(11) **EP 3 850 271 B1**
(45) Date of publication and mention of the grant of the patent: **10.01.2024**
(21) Application number: 19934379.9
(22) Date of filing: 03.10.2019
(51) Int. Cl.: F23K 1/00

(54) **A REACTOR CAPABLE OF CARBONIZED DRYING AND BURNING VOLATILE GASES TOGETHER WITH TOXIC GASES**
REAKTOR ZUR KARBONISIERTEN TROCKNUNG UND VERBRENNUNG VON FLÜCHTIGEN GASEN ZUSAMMEN MIT TOXISCHEN GASEN
RÉACTEUR POUVANT SÉCHER PAR CARBONISATION ET BRÛLER DES GAZ VOLATILS CONJOINTEMENT AVEC DES GAZ TOXIQUES

(43) Date of publication of application: 21.07.2021
(73) Proprietor: Ozyaman, Senol Faik, Istanbul (TR); Durdu, Zeynep, Istanbul (TR)
(72) Inventor: OZYAMAN, Senol Faik, Istanbul (TR)
(86) International application number: PCT/TR2019/050822
(87) International publication number: WO 2021/066760

(56) References cited:
- CN-A- 102 072 500
- CN-A- 108 167 833
- JP-A- 2000 097 416
- JP-A- 2003 240 227
- US-A- 2 138 120
- US-A- 2 286 309

## Description

### Technical Field

The invention relates to a reactor that is capable of drying and burning coal, forest waste, bituminous shale, dung, chicken manure, sewage sludge, hazardous or non-hazardous industrial wastes, hazardous hospital wastes and domestic wastes and that of burning the solid fuel which is carbonized dried in the oxygen-free environment on the reactor at 97% efficiency with toxic gases, flue gas emitted from the chimney to the atmosphere with an emission rate of 80% lower than the natural gas emission values known as clean energy and and the chimney gas output emission values well below the emission limit values of the Ministry of Environment.

### Prior Art

Bituminous schist, which constitutes one third of the world, is rock gas, in other words. This reserve is an endless one. However, the burning of the world's largest energy source is prohibited because other technologies in the world give too high emissions. The part that is produced as rock gas with high cost is relatively used but is not in demand today due to the fact that rock gas extraction costs 7 times more than natural gas production. However, our invention, which will be presented in detail below, performs the process of converting bituminous schist into energy by starting from the top of the ground in the form of rocks in our technology by breaking it in the size of flints in the stone crushing plant without any other contribution or process. Our invention emits from the flue gas to the atmosphere with an emission value close to zero and far below the limit value of the Ministry of Environment with 97% combustion efficiency in the combustion zone. It is the only technology that can burn directly with the cost of raw materials like $ 1 and reduces energy production costs by 80%. Although this situation decreases the production cost of the world's biggest energy problem, the bituminous schist reserve is the largest known energy source that will produce energy for our country and our world for thousands of years.

Today, fuel, recycling and energy production are of high importance and have a high impact on the development of countries. In particular, the efficient use and combustion of the already used solid fuels, and even the generation of energy through them, provide high advantages to the national economy.

Today, the units and systems that burn solid fuels in the most efficient way and convert them into energy are almost nonexistent. Currently used solid fuels (high-quality coal) are imported solid fuels of foreign origin, aiming for more efficiency and lower emission ratios. However, in our country and other countries, the combustion efficiency of solid fuel-burning boilers for heating purposes is between 40% and 60% depending on the quality of the fuel and the efficiency of fluidized bed boilers used in power plants is between 70% and 80% and the combustion efficiency is low, thus it gives high emissions to the atmosphere. All the environmental organizations in the world and the Kyoto Protocol oppose the production of energy from solid fuels, and the power plants are shut down. Therefore, energy costs increase dramatically because of their transition to other energy systems with high energy costs.

Coal is in the range of 1000 Kcal/kg to 2,500 Kcal/kg, having 25% humidity to 55% humidity and constitutes 80% of our coal reserve. Having high humidity and low kcal reduces its combustion efficiency as well as it pollutes the environment by throwing very high emission flue gas into the atmosphere from the chimney. More important is that it affects human health badly and the earth becomes uninhabitable.

The patent application of our numbered TR 2010 / 05272 works industrially, when the emission measurement values in the emission report we have commissioned to accredited laboratories, and the pages 30 - 31 - 32 / 34 of the emission report in Annex (1) are examined, it will be seen that the emission values are below the natural gas, known as a clean energy source, and far below the limit values of the Ministry of Environment. The reason is that in both inventions the combustion efficiency is 97% and the combustion cell reaches a temperature of 1800 C° within the flame circle and the combustion of all of the toxic and third gases rises from the chimney to the atmosphere with an emission close to zero. In other existing technologies, the combustion chamber (furnace) can reach up to 800 °C to 850 °C. The volatile gases start to burn at 900 °C, so as the 17% of the volatile and toxic gases can be burned, the remaining 83% exits the chimney before burning and gives very high emissions to the atmosphere. Since our invention reaches a high temperature of 1800 °C, the energy transfer is very high since the radiation efficiency is very high and the radiation emission is much higher than other technologies. In addition to providing 80% energy savings, our invention throws flue gas into the atmosphere with nearly zero emissions. Thus, it is much cleaner energy and environmentally friendly than natural gas.

The invention by 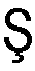 enol Faik ÖZYAMAN, with application no TR2010/05272 is a solid fuel-burning unit comprising a fuel supply chamber wherein the fuel to be sent for combustion to the combustion region found in the body is placed and the feed mechanism carrying the solid fuel found in the said chamber forward. This unit comprises a main burning block having an air and fuel cell connected to said solid fuel supply chamber, said main burning block having a plurality of air outlet vents formed on an external wall surface thereof; and a preventive surface positioned at a distance over said external wall surface of said main burning block so as to form a closed volume.

The unit described in document TR2010/05272 has the ability to burn solid fuels efficiently. However, it has the ability to burn only solid fuels. Drying process cannot be done with this unit. Solid fuels are delivered to the fuel cell by means of helices and the slag and residues of the burned fuels are automatically discharged out of the system. Especially in the case of burning coal, the volatile and toxic gases in the coal structure prevented from mixing into the atmosphere due to the structure of the fuel cell. This invention of Senol Faik Ozyaman has been patented in America, Russia, Australia, and some European countries. The new patent study, which will be described below, includes new and superior features developed by Senol Faik Ozyaman on the unit number TR2010/05272.

US2286309A relates to methods and apparatus for drying and also for incinerating waste materials, more particularly materials such as sewage, sludge in liquid condition or having a particularly high moisture content.

US2286309A relates to a method of drying sewage sludge of high moisture content and simultaneously burning readily combustible refuse, which comprises continuously introducing the wet sludge into a drying zone, thence through a plurality of succeeding drying zones and downwardly from zone to zone until the sludge is dry enough to be normally self-combustible if ignited, burning the refuse in a separate enclosure isolated against passage of fire or direct passage of gases to the lower drying zones, effecting the sludge drying action by conducting hot gaseous products of combustion from said enclosure into the presence 2,286,309 of the wet sludge in the upper zone or zones and thence along co-current with the drying sludge and at decreasing temperatures, and conducting such gaseous products with the evaporated moisture from the lower drying zone or zones into said hot gaseous products of combustion at a point prior to the introduction of said products of combustion into the presence of the wet sludge, to substantially eliminate any obnoxious odors in the gasses evolved from the drying sludge.

US2138120 relates to a drying 5o section separated into compartments by a plurality of vertically spaced hearths of which alternate hearths have central outlets and peripheral outlets respectively and the lowermost hearth is one with a permanently open central outlet, a burning section having a conical grate receiving dried material directly through said permanently open central outlet, an air inlet at the upper part of said drying section, an air outlet for discharging from the interior of the furnace air and vapor from the lower part of the drying section, a combustion gas outlet at the upper part of said burning section, and air-supply means below said grate.

Patents US2286309A and US2138120 cannot go beyond a conventional drying system. Within the system, it is not possible to burn high efficiency solid fuels with zero emissions and provide a drying process within the same body as in our system. In our system, a burner cell is configured within the same body. At the same time, this fuel cell provides full efficient combustion by burning flammable toxic gases that quickly escape into the atmosphere. Even if the patents US2286309A and US2138120 come together, it is not possible for them to reveal the technical advantages revealed in our system.

### Description of the Invention

The invention is intended to produce a system which, unlike the systems used in the current technique, that brings a new development to this area.

One purpose of the invention to provide the organic solid fuels to be burned at the same time as the drying unit integrated in the unit referred to in the patent application TR2010/05272, to the amount of moisture by being exposed to high temperature in the organic solid fuel-formed drying section containing 900 C ° flue gas in an oxygen-free environment formed on the one hand, and accordingly the carbonization occurs while the fuel is below the moisture content of the fuel during the time it will remain in an oxygen-free environment. Solid fuel does not absorb moisture from the outside moisture again, which gives it a very important feature. As solid fuel turns into a quality fuel, it also becomes storable in the open area as it will not absorb any more moisture. Thus, a system in which both burning and drying are combined is provided.

As a new expansion, the barrier surface and the burning block in our patent application TR2010 / 05272. As a result of the structural change we made as a result of our r&d work, the barrier surface consisting of two parts and the burning block are specified in the description and figures, and are made dome-like to withstand high temperatures. The working life of the specially designed reflector material is 10 times longer than that of the structure in the patent application no. TR2010 / 05272 and it is documented in our r&d studies and industrially speaking, the reactor works smoothly.

Before the structural change was made, while the CO (carbon monoxide) in the flue gas emission measurements in the TR 2010/05272 patent application was between 12 pm and 30 ppm in the flue gas, the structural design revision we made as a result of the r&d, the structural change we made by combining the barrier surface and the burning block structure, the barrier surface is prepared with special additives at an operating temperature of 2000 °C.

The result of the structural changes we have made in fire concrete refractory concrete and the combustion cell in the burning chamber reaches 1800 °C, the result of the flue gas emission values of CO (carbon monoxide), as one of the accredited laboratory's measurements, is much lower than the other technology mentioned above. It is understood from the measurements of the flue gas emission report of the accredited laboratory.

CO (carbon monoxide) has been shown to be in the range of 0.015 ppm to 1 ppm, and the limit value of the Ministry of Environment is two over 375 ppm. In other words, the Ministry of Environment has proven with the flue gas emission report of the Accredited Laboratory that the flue gas limit value has been released to the atmosphere at 1 ppm at 375 ppm, and the organic clean energy in the world is below the emission values, even close to zero. The Emission Report will show that all other emission parameters are similarly very low.

Another purpose of the invention is that it has the ability to burn fuel with 80% efficiency using organic fuels dried by carbonization. For example, instead of the other boilers that burn 100 kg/hour of organic solid fuel, our reactor burns 20 kg/hour of organic solid fuel, producing the same energy with a near zero-emission.

Today, it is known that the most important problem in the world is energy costs. Our invention is very important from this point of view, and saving 80% would increase the reserve of organic fuels by twice as much. As an example, the life of low-calorie high humidity coals in our country has been calculated as 220 years. When our invention, the reactor (boiler) and the carbonization drying technology we designed on the reactor are used, it is anticipated that the life of our highhumidity low-calorie coal reserve will increase to 600 years.

In addition, in comparison to old boiler technologies, our invention can produce cleaner energy than natural gas, which is known as clean energy with saving 80% fuel (energy), and also our invention produces the same energy as the old technology produces with using 80% less solid fuel.

Another purpose of the invention is to contact the humid solid fuel with the flue gas by entering the flue gas into the atmosphere at 74 °C with the flue gas vapor during the passage of the flue gas from the drying unit to 900 °C formed in the combustion chamber of the deoxygenated medium in the solid fuel drying unit to dry solid fuel with maximum % 80 humidityby carbonizing.

By reducing the solid fuel below the moisture content of the young coal, (Elbistan coal 1070 kg/Kcal with 55% moisture) Elbistan coal having 55% moisture is dried with the carbonization technology of our invention is reduced to 5% moisture, and in the process every 1% humidity per calorie increases 50 Kg/Kcal. Thus, by increasing the moisture content of 50 × 50 kg / Kcal = 2500 kg/Kcal, Elbistan coal reaches 3570 kg/Kcal when new 2500 kg/Kcal is added to its original calorie of 1070 Kg/Kcal and reaches to old and high-quality coal category.

As an example: the maximum amount of moisture in coal is 55% and the internal moisture of the coal as we mentioned is in the range of 6% to 8% in general. So, in our invention, we need to reduce the moisture of such coal to one point below the internal moisture percent. The coal dried by carbonization does not moisturize again and even if it is wet exposing to rain in an open area, the coal does not moisturize again, and even if high stocks are made, the coal does not ignite in stock.

Our invention is able to burn solid fuel with very low, even near-zero-emissions. It also introduces an environmentally friendly system.

Another purpose of the invention is to reduce the energy costs of drying by 90% compared to existing technologies, as it does the drying process within itself. It is the introduction of an economic product where costs are reduced without the need for businesses to budget separately to dry solid fuel.

The invention removes 100% of the sewage sludge, bovine manure, domestic waste, hazardous hospital and industrial wastes, industrial treatment sludge. In addition, the present invention is industrially operable, which can burn with near-zero emissions.

Another purpose of the invention is to preserve the solid fuel ashes obtained from incineration and to use them as a waste of ash in cement, organic fertilizer and different industries.

Another purpose of the invention is that the current technology requires the removal of ashes every day. However, with this system, it is possible to automatically retrieve and store the ashes.

Another purpose of the invention was to obtain steam and generate electricity by installing a coil on the system. Hot water can be obtained. Also, it is possible to obtain hot water and hot air for heating the spaces.

In order to fulfill the above-described purposes, the present invention provides a solid-fuel burning and drying unit capable of carbonized drying and burning of toxic gases according to claim 1.

### Brief Description of the Figures

Figure-1 is the general perspective view of the reactor of the invention.
Figure-2 is the section perspective view of the reactor of the invention.
Figure-3 is the section perspective view of the reactor of the invention from a different angle.
Figure - 4 is the top view of the blocking surface of the burning zone in the reactor of the invention.
Figure - 5 is the cross-sectional perspective view of the ash-collecting zone of the reactor of the invention from the top.
Figure - 6: Close-up exterior elevation perspective view of the drying unit of the invention.

**Reference Numbers**

| | | | |
|---|---|---|---|
| 1. | Burning and drying unit | 18 - | Bunker |
| 2. | Fuel cell | 19 - | Fuel transport pipe |
| 2.1- | Combustion air feeding tube | 19.1 - | Coil |
| 2.2- | Combustion air vent holes | 19.2 - | Discharge pipe. |
| 3. | Ash discharge cone | 20 - | Fuel discharge outlet |
| 4. | Blocking surface | 20.1 - | Discharge pipe. |
| 4.1 | Bedding zone | 21 - | Propulsion element |
| 5. | Reflector material (fired brick ) | 22 | - Steam collection and discharge pipe |
| 6 - | Hot Zone | | |
| 7 - | Combustion zone | 23 | - Steam outlet |
| 8 - | Particle collection zone | 24 | - Steam suction line |
| 8.1 | Particle discharge pipe | 25 | - Ash discharge line |
| 8.2 | Particle discharge outlet | 25.1- | Ash discharge pipe and apparatus |
| 8.3 | - Open area with particle impact screen | 26 | - Ash discharge engine group |
| 8.4 | - Particle side wall | 27 | - Incineration air provider |
| 9 - | Bearing feet | | |
| 10 - | Drying unit | 28 | - Fuel dispatch main engine |
| 11 | - Coil | | |
| 11.1 | - Drying unit inlet | 29 | - Fuel supply drive unit |
| 12 | - Main shaft of solid fuel mixer | 30 | - Main Body |
| 13 | - Engine reducer | 31 | - Fuel supply transport line |
| 14 | - Flue gas pipe | | |
| 15- | Access channel to drying unit | 31.1 | - Conical coil line |
| 15.1-unit | Discharge fan to the drying | 32 | - Slag crusher unit |
| | | 33 | - Conical coil |
| 15.2 | - Flue gas fan engine | 34 | - Fuel transport shaft |
| 15.3. | - Transport pipe | 35 | - Flue gas cavities |
| 16 | - Friction surface | 36 | - Combustion cell peepholes |
| 16.1 | Side walls | | |
| 16.2. | Bottom plate | 36.1 | Combustion cell cover |
| 17 | - Temperature sensor | 37 | - Flue gas transition gap |

### Detailed Description Of The Invention

The solid fuel burning and drying unit (1), shown in Figure-1, is capable of drying by carbonizing and burning the third gas together with the toxic gases. In general, it has a main body (30), comprising a fuel cell (2) configured in the said main body (30), flue gas cavities (35) providing flue gas outlet towards the outer wall of the upper zone dome structure, a barrier surface (4) which closes said fuel cell from the upper region and enables combustion of toxic and volatile gases in the combustion zone (7) without mixing with the atmosphere, fuel supply elements and fuel discharge elements that deliver fuels to be burned into the fuel cell. The said fuel cell (2) also contains the combustion air supply tube (2.1) and the combustion air vent holes (2.2). The system also includes an ash discharge cone (3), ash discharge line (25), ash discharge pipe and apparatus (25.1), ash discharge engine group (26), incineration air provider (27), fuel dispatch main engine (28) and fuel supply drive unit (29).

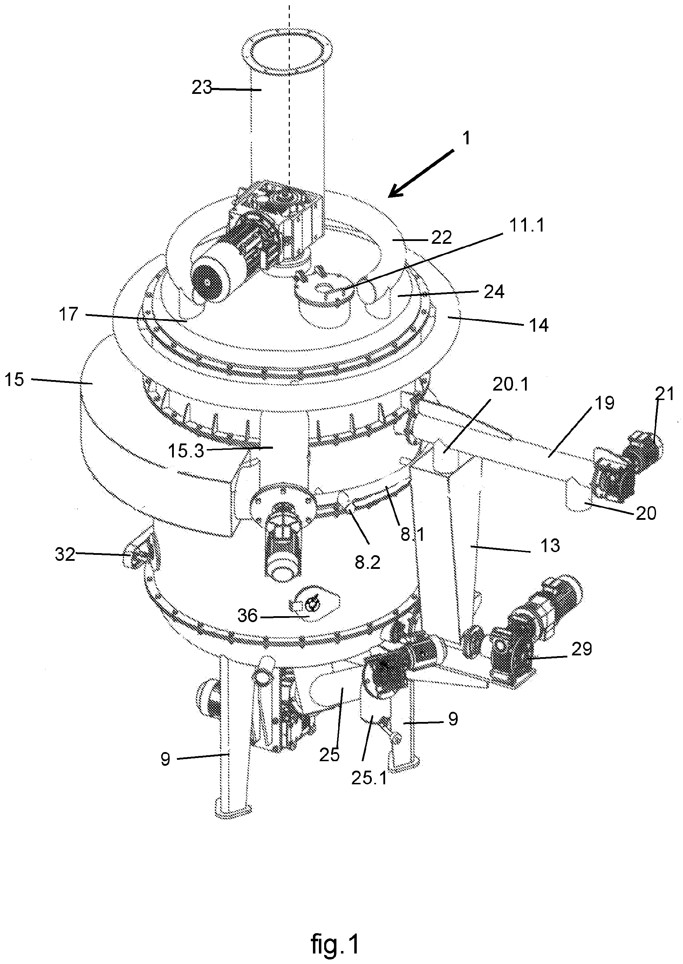

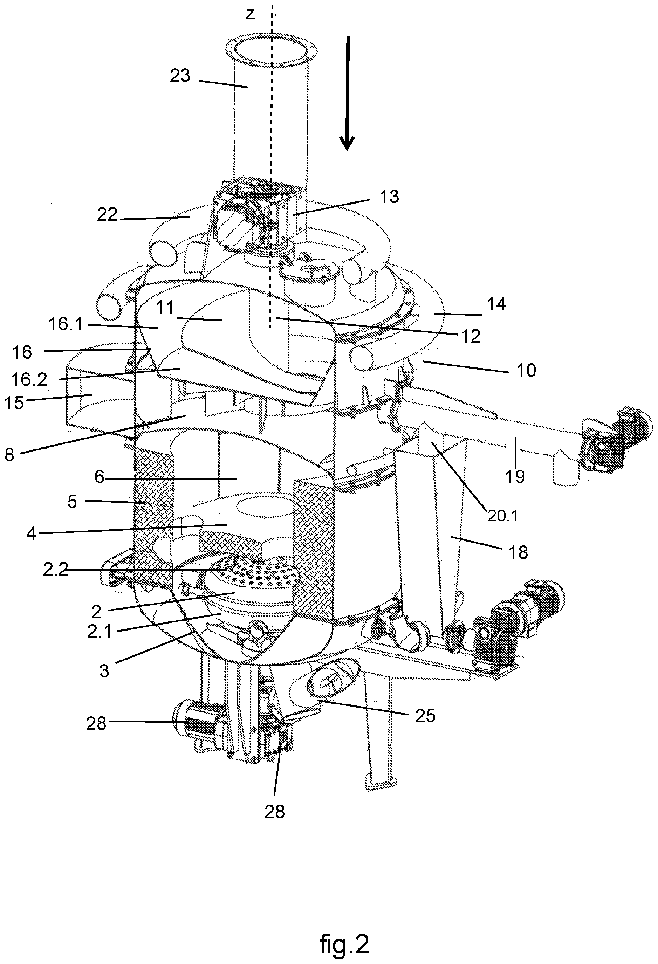

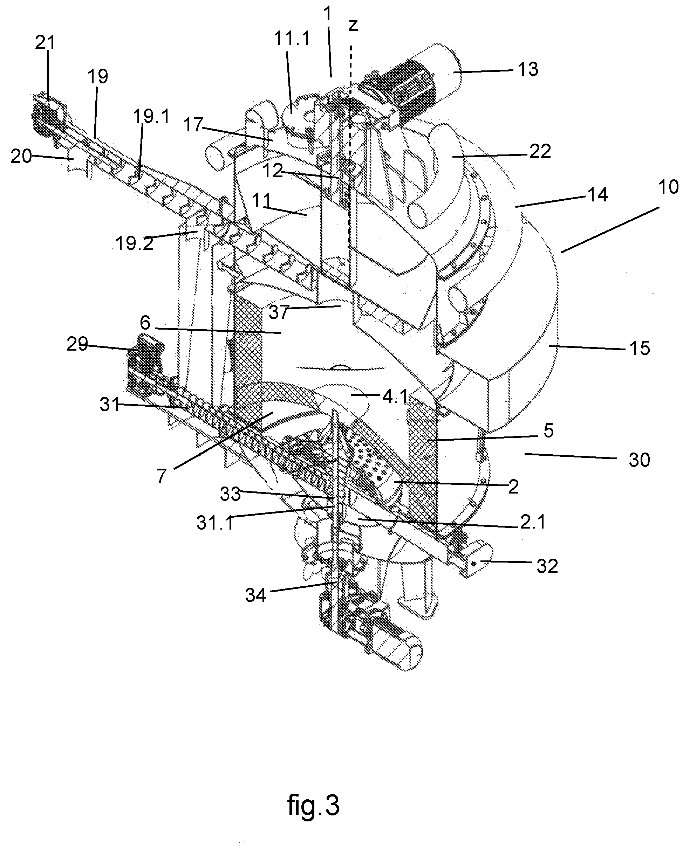

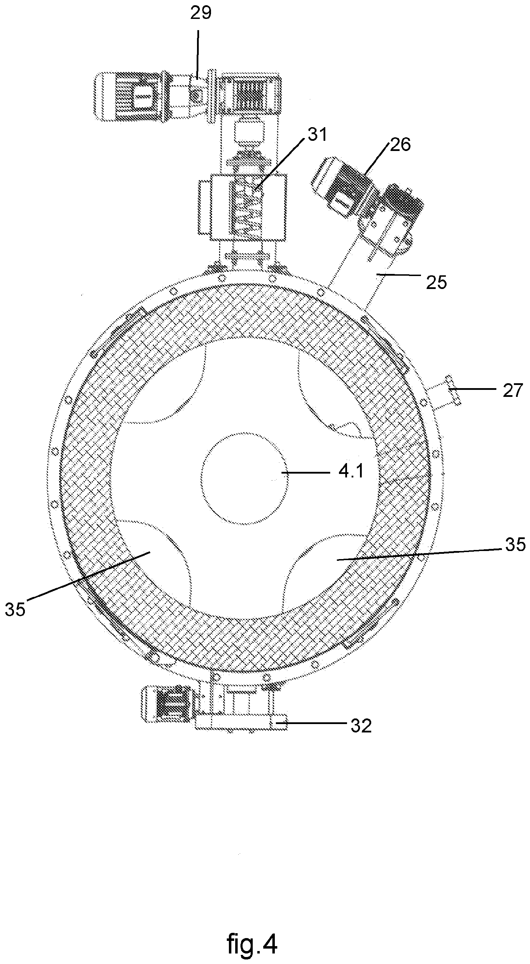

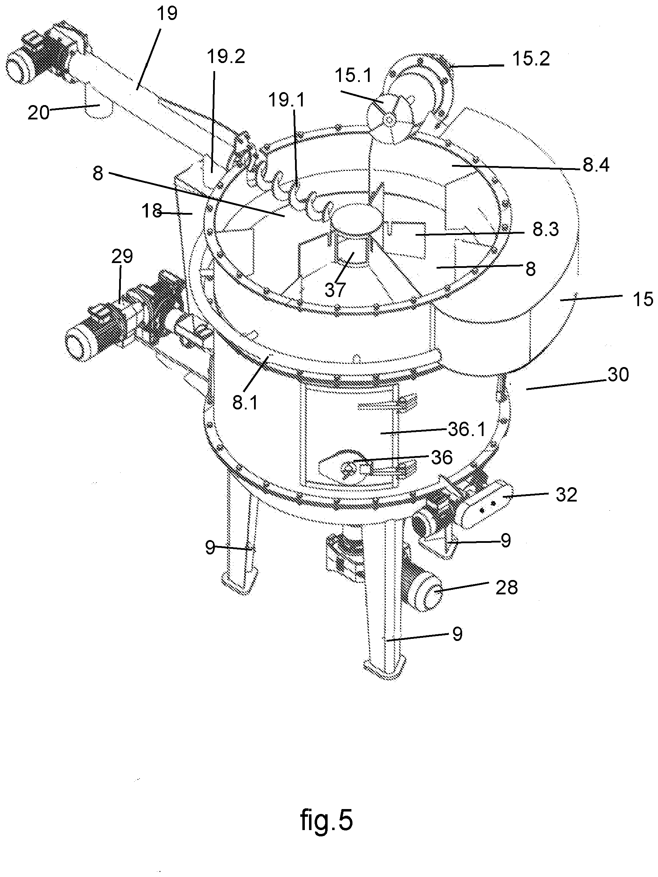

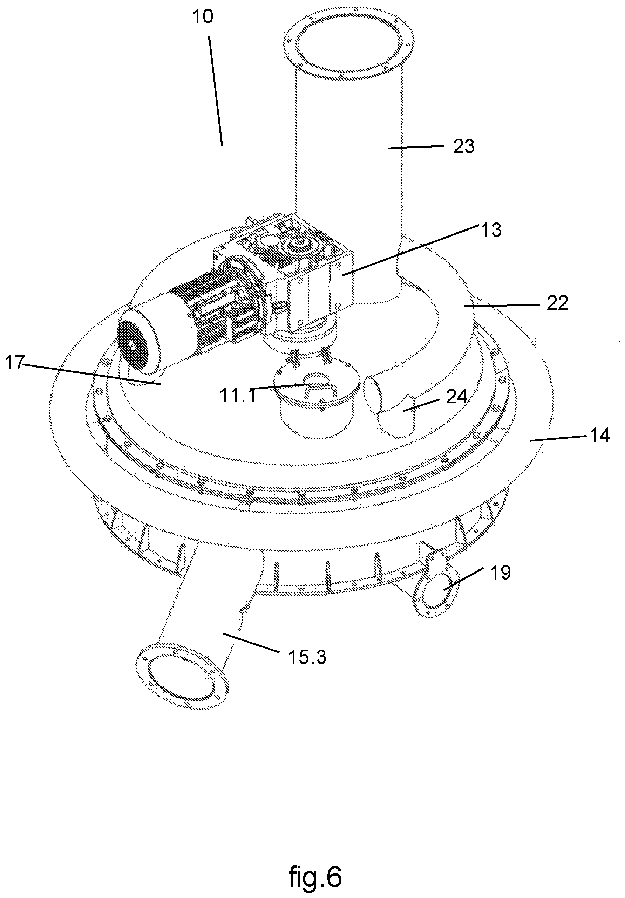

The combustion and drying unit (1), shown in Figure 2, as its inventive feature comprises a drive element configured on the main body (30) and a drying unit (10) which rotates by means of augers (11) in the rotation axis (z) and generates frictional energy and dried the heat and moist fuel coming from the hot zone. The drying unit (10) has a solid fuel mixer main shaft (12), where rotational motion is generated by at least one motor reducer (13), and a friction surface (16) that turns damp fuel by means of coils (11) configured on this solid fuel mixer main shaft (12). The said drying unit (10) includes sidewalls with conical surfaces (16.1) and a particle collection zone (8) with particle impact screen (8.3) that allows the passage of particles to the particle collection zone (8) seen in Figure - 5 and a particle collection zone (8) where the right amount of suction is done to the particle evacuation outlet (8.2) and the particles in the drying unit (10) are discharged by means of the discharge tube (8.1) shown in Figure 1. In the reactor combustion zone (7) flue gas fan suction pipe (Figure - 1) also has a flue gas pipe (14) where hot air is connected by a T connection and allows hot air to circulate. The combustion and drying unit (1) has bearing feet (9).

On the other hand, for the fuel to be dried, the bunker (18) in Figure-1, the fuel cell (2) in the bunker (18) in Figure-3 that show the solid fuel that comes with the fuel supply transport line, as well as the fuel cell (2) fed through a conical coil line, the heat energy obtained by the fuel is available. The central shaft of the reactor from the combustion chamber in 900 °C flue-gas drying unit (10) to the drying unit transition line (15) provides the transportation of the flue gas to the drying unit, under 900 °C from the combustion chamber to the drying unit by absorbing the flue gas discharge fan (15.1) and flue gas fan motor (15.2) provides. This structure also contains a transport pipe (15.3) (see Figure-6). It contains the coil (19.1) which allows transport to the drying unit (10), and the fuel transport pipe (19), the propulsion element (21) and the discharge pipe (19.2) which provide rotational movement to the said coil. In addition, the said drying unit (10) contains at least one steam suction line (24), a steam collection and discharge pipe (22), and at least one steam outlet (23), which allows the said steam to be delivered to the outside environment and/or to the line where the steam will be used.

The operation of the combustion and drying unit (1) in Figure-3 is as follows; the fuels transferred to the fuel cell (2) by means of the fuel supply transport line (31) are subject to combustion from this region. By means of the barrier surface (4) having the bearing region (4.1) in the fuel cell (2), the fuels are burned together with the volatile and toxic gases with an emission close to zero. The blocking surface (4) and fuel cell (2) are surrounded by the reflector material (5). Just above the hot zone (6), there is the particle collection zone (8) and above it, there is the drying unit (10). The fuel supply transport line (31) also has a conical coil line (31.1). On the other hand, the conical coil (33), the fuel transport shaft (34), the flue gas cavities (35), the combustion chamber peepholes (36), the combustion chamber cover (36.1) and the flue gas transition cavity (37) is integrated into the system.

The mode of operation of the drying unit (10) is as follows; the fuels to be dried into the drying unit (10) are supplied from any outside supply bunker to the moist solid fuel drying unit inlet (11.1). The fuel to be dried in the drying unit (10) is subjected to rotational effect in this area. The moist fuel to be dried by transferring the blades of the solid fuel mixer main shaft (12) in the rotation axis of the coil (11) during rotation will be continuously rotated in this area. The material (moist fuel) is taken from the bottom to the top and the fuel to be dried is constantly mixed. Furthermore, the high temperature from the lower hot zone (6) to the environment is provided by the bottom plate (16.2). This environment is oxygen-free environment. Its transfer by means of the coil (11) also creates a frictional effect. Accordingly, a temperature is formed by friction in the oxygen-free environment. Also, 900 °C provides drying as the flue gas passes through the drying unit. When the moist solid-fuel internal temperature of the product to be dried reaches 105 °C, the temperature sensor (17) is activated and the dry solid fuel is discharged to the outside via the fuel discharge outlet (20). The benefits of the fuel discharge output (20) are clearly evident when delivering high-calorie high-quality, dehumidified solid fuel to a sack or a tractor or trailer and obtaining energy, as well as recycling and disposing of 100%. During the discharge of the dried solid fuel to the drying unit by the propulsion of the propulsion element (21), the dried fuel is discharged by the discharge pipe (20.1) to the fuel supply body and the dried fuel is discharged by the discharge outlet ( 20).

At the same time, the transition channel from the flue gas outlet to the drying unit (15) via the flue gas pipe (14) is given into the hot air drying unit (10), which is received through a T pipe. The steam generated here is given out by means of the steam suction line (24) and steam outlet (23). Or it is possible to transport steam through pipes to a region where steam is needed.

During the passage of flue gas in the drying unit (10), the particles are oriented towards the corner of the side walls (8.4) with the force of the center by the rotational effect, and through the open field with the particle impact screen (8.3) and the material weight, the particles fall from this screen opening area to the particle collection zone (8). Particles falling in this zone are evacuated to the exterior zone via the discharge pipe (8.1) and a suction line and the particle discharge outlet (8.2).

The drying unit (10) has a structure bearing the same rotation axis (z) and the same main body (30) center and moving from the single drive center. At the same time, together with the heat from the hot zone (6), the rotational and frictional effect created by the coils (11), and the effect of the hot air from the transition line (15) to the drying unit, it has a superior drying feature where a three-times effective drying is performed.

The drying unit (10) of Figure 2 rotates the drying motor reducer (13) and the first factor, which consists of the mixing of the moisturized solid fuel mixer of the transfer coil (11), causes the solid fuel's core temperature to reach 50 °C. The second factor is the heat transfer of the heat generated by burning solid fuel through the heating bottom plate (16.2) of the fuel cell (2) under the heat generated by the fuel cell (6) at the top of the fuel cell is 1800 °C and in the chimney gas hot zone at the bottom of the drying unit at 900 °C. The third factor is that the solid fuel which is being installed due to the high temperature flue gas oxygen-free environment during mixing of solid fuel in an oxygen-free environment, which passes through the access channel (15) of the flue gas from the central cavity of the reactor combustion cell, does not burn and does not fire and does not present danger. 900 °C flue-gas of solid fuel in the drying unit during the drying, the heat energy 90% of solid fuel drying with flue gas in spent steam outlet pipe (chimney) 74 °C water to steam and exits as converted into automation control of agricultural land is to be used as irrigation water. By combining the three factors mentioned above, the drying process is provided with 90% lower cost than existing technologies. In addition, while the amount of dehumidification in solid fuels cannot exceed the maximum 15% in other current technologies, drying cost of the technology in our invention, which delivers 80% moisture reaching up to 7 times of the humidity of the current technology, it also lowers the max 15% dehumidification cost of the current technology by 80% via the carbonized drying process.

Thus, the heat energy obtained from the heat center sends the flue gas drying unit (10) to the drying unit transition channel (15) of the flue gas shown in an oxygen-free environment and the drying capacity is 750 kg/hour. In the test performed by the accredited laboratory, 750 kg / h drying the fuel in 1 hour and reducing it from 80% moisture to 2% moisture, dried solid fuel (Egg hatching manure) is 80% moist calorific value is 150 kg/Kcal is reduced to 2 humidity and increased to 3570 kg/Kcal, 1800 c ° combustion zone (7) by descending from 750 kg laying manure to 2% moisture, dry carbonized 3570 kg/kcal solid fuel is obtained at 165 kg/hour. 15% of the solid fuel dried by carbonization is used to obtain heat energy by burning in the reactor combustion zone (egg chicken manure), approximately 24.5 kg/hour solid fuel is burned to the fuel cell by obtaining heat energy by carbonizing the drying is carried out. The excess fuel obtained by 24.5 kg/hour solid fuel used by carbonized dried solid fuel (egg chicken manure) to obtain heat energy is 140.5 kg/hour. While the solid fuel with an economical value of 3750 kcal /kg is obtained, organic fertilizer which is an environmental disaster is 100% disposed of and converted to energy.

## Claims

1. A solid-fuel burning and drying unit (1) capable of carbonized drying and burning of toxic gases, comprising
a main body (30), a fuel cell (2) configured in a combustion zone (7) of said main body (30);
a barrier surface (4) which separates the combustion zone (7) from an upper hot zone (6) of the main body (30) and enables combustion of toxic and volatile gases in the combustion zone (7) without mixing with the atmosphere;
flue gas cavities (35) provided in the barrier surface (4) providing an outlet of flue gas from the combustion zone (7) towards the outer wall of the upper, hot zone (6);
fuel supply elements (31) and fuel discharge pipe (19.2) that deliver fuel to be burned into the fuel cell;
a drying unit (10) contained in said main body (30) and comprising a coil (11) rotated by a motor reducer (13);
wherein the damp fuel is dried in said drying unit (10) by heat from the combustion zone and by frictional heat generated by rotating said coil (11) through the fuel by means of said motor reducer (13).

2. A solid fuel burning and drying unit (1) according to Claim 1, further comprising a solid fuel mixer main shaft (12), wherein rotational motion is generated by said motor reducer (13), and a friction surface (16) which rotates and dries the damp fuel by means of the coil (11) configured on said solid fuel mixer main shaft (12).

3. A solid fuel burning and drying unit (1) according to Claim 1, further comprising a particle collection zone (8) wherein suction is done to a particle evacuation outlet (8.2) and the particles in the drying unit (10) are discharged by means of a discharge tube (8.1).

4. A solid fuel burning and drying unit (1) according to Claim 3, wherein said drying unit (10) comprises sidewalls with conical surfaces (16.1) and a particle impact screen (8.3) that allows the passage of particles to the particle collection zone (8).

5. A solid fuel burning and drying unit (1) according to Claim 1, further comprising
• at least one access channel (15) for transferring 900°C flue gas to the drying unit (10),
• a discharge fan (15.1), a flue gas fan motor (15.2), and a transfer pipe (15.3) which transfer the flue gas from the combustion zone to said access channel (15),

6. A solid fuel burning and drying unit (1) according to Claim 1, further comprising a drying unit Inlet (11.1) which allows the transfer of moist solid fuel from any bunker other than the fuel to be dried to the drying unit (10).

7. A solid fuel burning and drying unit (1) according to Claim 1, wherein said drying unit (10) comprises at least one steam suction line (24), a steam collection and discharge pipe (22), and at least one steam outlet (23), which allow said steam to be delivered to the outside environment and/or to a line where the steam will be used.

8. A solid fuel burning and drying unit (1) according to Claim 1, wherein said drying unit (10) has a structure bearing the same rotation axis (z) and the same center of the main body (30) and moving from the motor reducer (13).

9. A solid fuel burning and drying unit (1) according to Claim 1, wherein three effective drying is done in said drying unit (10) with the effect of heat from the hot zone (6) and hot air from the flue gas outlet (15) and the rotational and frictional effect created by means of the coil (11).

10. A solid fuel burning and drying unit (1) according to Claim 3, further comprising particle side walls (8.4) in which the particles are oriented with the force of the center with the rotational effect during the flue gas passage in the said drying unit (10).

11. A solid fuel burning and drying unit (1) according to Claim 1, further comprising a fuel discharge outlet (20) which discharges the dry solid fuel, and a temperature sensor (17) which is activated when the moist solid-fuel internal temperature of the product to be dried reaches 105 °C, whereby dry solid fuel is discharged to the outside via the fuel discharge outlet (20)

12. A solid fuel burning and drying unit (1) according to Claim 1, further comprising a discharge pipe (19.2), a fuel transport pipe (19), a coil (19.1) provided in the fuel transport pipe (19) and which allows the fuel dried in said drying unit (10) to discharge via said discharge pipe (19.2), a propulsion element (21) which provides rotational movement to said coil (19.1).

## Patentansprüche

1. Festbrennstoff-Verbrennungs- und Trocknungseinheit (1), die zur karbonisierten Trocknung und Verbrennung von toxischen Gasen geeignet ist, mit
- einen Hauptkörper (30), eine Brennstoffzelle (2), die in einer Verbrennungszone (7) des Hauptkörpers (30) angeordnet ist;
- eine Barrierefläche (4), die die Verbrennungszone (7) von einer oberen heißen Zone (6) des Hauptkörpers (30) trennt und die Verbrennung von giftigen und flüchtigen Gasen in der Verbrennungszone (7) ohne Vermischung mit der Atmosphäre ermöglicht;
- Rauchgashohlräume (35), die in der Barrierefläche (4) vorgesehen sind und einen Auslass von Rauchgas aus der Verbrennungszone (7) in Richtung der Außenwand der oberen, heißen Zone (6) bereitstellen;
- Brennstoffzuführungselemente (31) und eine Kraftstoffablassrohr (19.2), die den zu verbrennenden Brennstoff in die Brennstoffzelle liefern;
- eine Trocknungseinheit (10), die in dem Hauptkörper (30) enthalten ist und eine Spule (11) umfasst, die von einem Motorreduzierers (13) gedreht wird;
wobei der feuchte Brennstoff in der Trocknungseinheit (10) durch Wärme aus der Verbrennungszone und durch Reibungswärme getrocknet wird, die durch das Drehen der Spule (11) durch den Brennstoff mittels des Motorreduzierers (13) erzeugt wird.

2. Festbrennstoff-Verbrennungs- und Trocknungseinheit (1) nach Anspruch 1, ferner umfassend eine Festbrennstoffmischer-Hauptwelle (12), wobei die Drehbewegung durch den Motorreduzierers (13) erzeugt wird, und eine Reibungsfläche (16), die den feuchten Brennstoff mit Hilfe der auf der Festbrennstoffmischer-Hauptwelle (12) angeordneten Spule (11) dreht und trocknet.

3. Festbrennstoff-Verbrennungs- und Trocknungseinheit (1) nach Anspruch 1, die ferner eine Partikelsammelzone (8) umfasst, in der ein Partikelabsaugungsauslass (8.2) angesaugt wird und die Partikel in der Trocknungseinheit (10) mittels eines Austragsrohrs (8.1) ausgetragen werden.

4. Festbrennstoff-Verbrennungs- und Trocknungseinheit (1) nach Anspruch 3, wobei die Trocknungseinheit (10) Seitenwände mit konischen Oberflächen (16.1) und ein Partikelaufprallsieb (8.3) umfasst, das den Durchgang von Partikeln zur Partikelsammelzone (8) ermöglicht.

5. Festbrennstoff-Verbrennungs- und Trocknungseinheit (1) nach Anspruch 1, ferner umfassend
- mindestens einen Zugangskanal (15) für den Transport von 900°C heißem Rauchgas zur Trocknungseinheit (10),
- ein Abgasgebläse (15.1), einen Rauchgasgebläsemotor (15.2) und ein Übertragungsrohr (15.3), die das Rauchgas aus der Verbrennungszone in den Zugangskanal (15) leiten.

6. Festbrennstoff-Verbrennungs- und Trocknungseinheit (1) nach Anspruch 1, die ferner einen Trocknungseinheit-Einlass (11.1) umfasst, der den Transfer von feuchtem festem Brennstoff aus einem anderen Bunker als dem zu trocknenden Brennstoff zur Trocknungseinheit (10) ermöglicht.

7. Festbrennstoff-Verbrennungs- und Trocknungseinheit (1)nach Anspruch 1, wobei die Trocknungseinheit (10) mindestens eine Dampfansaugleitung (24), eine Dampfsammel- und -abgabeleitung (22) und mindestens einen Dampfauslass (23) umfasst, die es ermöglichen, den Dampf an die Außenumgebung und/oder an eine Leitung abzugeben, in der der Dampf verwendet wird.

8. Festbrennstoff-Verbrennungs- und Trocknungseinheit (1) nach Anspruch 1, wobei die Trocknungseinheit (10) eine Struktur aufweist, die dieselbe Rotationsachse (z) und dasselbe Zentrum des Hauptkörpers (30) trägt und sich von dem Motorreduzierer (13) aus bewegt.

9. Festbrennstoff-Verbrennungs- und Trocknungseinheit (1) nach Anspruch 1, wobei in der Trocknungseinheit (10) eine dreifach wirksame Trocknung durch die Wirkung der Wärme aus der heißen Zone (6) und der heißen Luft aus dem Rauchgasauslass (15) sowie durch den mittels der Spule (11) erzeugten Dreh- und Reibungseffekt erfolgt.

10. Festbrennstoff-Verbrennungs- und Trocknungseinheit (1) nach Anspruch 3, ferner mit Partikelseitenwänden (8.4), in denen die Partikel während des Rauchgasdurchgangs in der Trocknungseinheit (10) durch den Rotationseffekt mit der Kraft des Zentrums ausgerichtet werden.

11. Festbrennstoff-Verbrennungs- und Trocknungseinheit (1) nach Anspruch 1, ferner mit einem Brennstoffauslass (20), der den trockenen Festbrennstoff ausgibt, und einem Temperatursensor (17), der aktiviert wird, wenn die Innentemperatur des feuchten Festbrennstoffs des zu trocknenden Produkts 105 °C erreicht, wodurch der trockene Festbrennstoff über den Brennstoffauslass (20) nach außen ausgegeben wird.

12. Festbrennstoff-Verbrennungs- und Trocknungseinheit (1) nach Anspruch 1, ferner umfassend ein Kraftstoffablassrohr (19.2), ein Brennstoff-Transportrohr (19), eine in dem Brennstoff-Transportrohr (19) vorgesehene Spule (19.1), die es ermöglicht, dass der in der Trocknungseinheit (10) getrocknete Brennstoff über das Kraftstoffablassrohr (19.2) ausgetragen wird, und ein Antriebselement (21), das die Spule (19.1) in Drehbewegung versetzt. Brennstoffabgabeleitung.

## Revendications

1. Unité de combustion et de séchage de combustibles solides (1) capable de sécher et de brûler des gaz toxiques par carbonisation, comprenant
- un corps principal (30), une pile à combustible (2) configurée dans une zone de combustion (7) dudit corps principal (30);
- une surface de la barrière (4) qui sépare la zone de combustion (7) d'une zone chaude supérieure (6) du corps principal (30) et permet la combustion de gaz toxiques et volatils dans la zone de combustion (7) sans mélange avec l'atmosphère;
- des cavités pour les gaz de combustion (35) prévues dans la surface de la barrière (4) permettant une sortie des gaz de combustion de la zone de combustion (7) vers la paroi extérieure de la zone chaude supérieure (6);
- des éléments d'alimentation en combustible (31) et un tuyau d'évacuation du combustible (19.2) qui acheminent le combustible à brûler dans la pile à combustible;
- une unité de séchage (10) contenue dans le corps principal (30) et comprenant une bobine (11) entraînée en rotation par un motoréducteur (13);
dans laquelle le combustible humide est séché dans ladite unité de séchage (10) par la chaleur provenant de la zone de combustion et par la chaleur de friction générée par la rotation de ladite bobine (11) à travers le combustible au moyen dudit motoréducteur (13).

2. Unité de combustion et de séchage de combustible solide (1) selon la revendication 1, comprenant en outre un arbre principal de mélangeur de combustible solide (12), dans lequel un mouvement de rotation est généré par ledit motoréducteur (13), et une surface de frottement (16) qui tourne et sèche le combustible humide au moyen de la bobine (11) configurée sur ledit arbre principal de mélangeur de combustible solide (12).

3. Unité de combustion et de séchage des combustibles solides (1) selon la revendication 1, comprenant en outre une zone de collecte des particules (8) dans laquelle une aspiration est effectuée vers une sortie d'évacuation des particules (8.2) et les particules dans l'unité de séchage (10) sont évacuées au moyen d'un tube d'évacuation (8.1).

4. Unité de combustion et de séchage de combustibles solides (1) selon la revendication 3, dans laquelle ladite unité de séchage (10) comprend des parois latérales à surfaces coniques (16.1) et un écran d'impact des particules (8.3) qui permet le passage des particules vers la zone de collecte des particules (8).

5. Unité de combustion et de séchage de combustibles solides (1) selon la revendication 1, comprenant en outre
- au moins un canal d'accès (15) pour transférer les gaz de combustion à 900°C vers l'unité de séchage (10),
- un ventilateur de décharge (15.1), un moteur de ventilateur de gaz de combustion (15.2) et un tuyau de transfert (15.3) qui transfèrent les gaz de combustion de la zone de combustion vers ledit canal d'accès (15).

6. Unité de combustion et de séchage de combustibles solides (1) selon la revendication 1, comprenant en outre une entrée d'unité de séchage (11.1) qui permet le transfert de combustibles solides humides de toute soute autre que le combustible à sécher vers l'unité de séchage (10).

7. Unité de combustion et de séchage de combustibles solides (1) selon la revendication 1, dans laquelle ladite unité de séchage (10) comprend au moins une conduite d'aspiration de vapeur (24), un tuyau de collecte et d'évacuation de vapeur (22), et au moins une sortie de vapeur (23), qui permettent d'acheminer ladite vapeur vers l'environnement extérieur et/ou vers une conduite où la vapeur sera utilisée.

8. Unité de combustion et de séchage de combustibles solides (1) selon la revendication 1, dans laquelle ladite unité de séchage (10) a une structure portant le même axe de rotation (z) et le même centre du corps principal (30) et se déplaçant à partir du motoréducteur (13).

9. Unité de combustion et de séchage de combustibles solides (1) selon la revendication 1, dans laquelle trois séchages efficaces sont effectués dans ladite unité de séchage (10) sous l'effet de la chaleur provenant de la zone chaude (6) et de l'air chaud provenant de la sortie des gaz de combustion (15) et de l'effet de rotation et de frottement créé au moyen de la bobine (11).

10. Unité de combustion et de séchage de combustibles solides (1) selon la revendication 3, comprenant en outre des parois latérales de particules (8.4) dans lesquelles les particules sont orientées par la force du centre avec l'effet de rotation pendant le passage des gaz de combustion dans ladite unité de séchage (10).

11. Unité de combustion et de séchage de combustibles solides (1) selon la revendication 1, comprenant en outre une sortie d'évacuation du combustible (20) qui évacue le combustible solide sec, et un capteur de température (17) qui est activé lorsque la température interne du combustible solide humide du produit à sécher atteint 105 °C, le combustible solide sec étant alors évacué vers l'extérieur par la sortie d'évacuation du combustible (20).

12. Unité de combustion et de séchage de combustibles solides (1) selon la revendication 1, comprenant en outre un tuyau d'évacuation (19.2), un tuyau de transport de combustible (19), une bobine (19.1) placée dans le tuyau de transport de combustible (19) et permettant au combustible séché dans ladite unité de séchage (10) de s'évacuer par ledit tuyau d'évacuation (19.2), un élément de propulsion (21) qui fournit un mouvement de rotation à ladite bobine (19.1).
